# EUROPEAN PATENT APPLICATION

(11) **EP 4 099 061 A1**
(43) Date of publication of application: **07.12.2022**
(21) Application number: 21176850.2
(22) Date of filing: 31.05.2021
(51) Int. Cl.: G01S 19/09, G01S 5/00, G01S 19/39

(54) **METHOD FOR GENERATING AND PROVIDING A PRECISE POSITIONING SOLUTION OF A MOBILE RECEIVER IN A GNSS SYSTEM BY A CENTRAL COMPUTATION UNIT AND A SOFTWARE PRODUCT AND ITS DISSEMINATION**

(71) Applicant: Spaceopal GmbH, 80335 München (DE)
(72) Inventor: Bauerhin, Andre, 80335 Munich (DE); Fedeli, Sebastian, 81925 Munich (DE)
(74) Representative: Müller Schupfner & Partner Patent- und Rechtsanwaltspartnerschaft mbB

(57) **Abstract**

A method for providing a position of a mobile receiver (5) in a GNS system, comprising:
- receiving primary data (31) of the mobile receiver (5) at a central computation unit (30), the primary data (31) being at least suitable for determining pseudoranges of the mobile receiver (5) and being forwarded from the mobile receiver (5) to the central computation unit (30), preferably via a satellite signal, a radio signal or a terrestrial signal,
- receiving secondary data (32) at the central computation unit (30), the secondary data (32) including at least secondary data (32) for determining correction information and being forwarded from at least one reference station (15) to the central computation unit, preferably via a satellite signal, a radio signal or a terrestrial signal,
- determining at the central computation unit (30)
-- the correction information for the position of the mobile receiver (5) specified by the primary data (31) and
-- the position of the mobile receiver (5) and/or basis information concerning the position of the mobile receiver (5).

## Description

The present invention concerns a method for generating and providing a position of a mobile receiver in a GNS system, a central computation unit and a software product.

GNS systems are well known. Examples for GNS systems are GPS, GLONASS, BeiDou and Galileo. They provide the functionality to determine the position of a static or mobile receiver, which can be, for example, integrated into in a mobile phone or a vehicle. Essential parts of a GNS system are satellites, which orbit the Earth and emit navigation signals. The navigation signals consist of a carrier signal with a ranging code and, optionally, navigation data modulated onto the carrier. The ranging signal in combination with the navigation data is used to determine the position of the receiver. The navigation signal is used to determine pseudoranges.

However, the signal transmission paths of the navigation signals from different satellites to the receiver propagate through different parts of the atmosphere and thus accumulate different delays, caused by the troposphere and the ionosphere. In addition, the navigation information transmitted by the satellite, which contains the satellite's position, clock offset and signal biases, are affected by errors. As a consequence, navigation signals received by the receiver have different biases or offsets and thus degrade the accuracy of position determination.

For the computation of corrections to these errors and eliminating them at the receiver, a network of global or regional reference station network can be used for the generation of differential GPS (DGPS) or GNSS corrections. The reference station network consists of fixed receiver stations in the proximity of the mobile receiver. These stations broadcast the difference between measured satellite pseudoranges and modelled pseudoranges based on the known station position, and the mobile receivers apply these corrections to their measured pseudorange. The correction signal is typically broadcast locally via ground-based radio transmitters of shorter range. To overcome the limited accuracy of the pseudorange measurements, differential processing is also done using the more precise carrier-phase observations. This technique is known as real-time kinematic (RTK) positioning and is based on ambiguity resolution of differential carrier-phase measurements between the mobile receiver and a real or virtual reference station.

For improving the positioning accuracy without the dependency on a dense reference station network in the vicinity of the mobile receiver, the precise point positioning (PPP) method has been developed. In contrast to the DGPS or RTK, the PPP approach does not rely on the spatial error correlation of differential measurements, but instead eliminates the individual error components caused by, for example, satellite orbit or clock, biases and atmospheric delays, through precise models in the calculation of the position for the mobile receiver. Thus, it is possible to calculate positions accurate to a decimetre or even below with dual-frequency measurements. It is essential for realizing such an accuracy to provide precise correction information, in particular precise orbit and clock correction information. Further, PPP allows a precise determination of the position of the mobile receiver even in regions without a dense reference station network. Examples for the PPP method can be found in EP 2 281 210 B1 and EP 10 194 428 A2.

Taking the above into account, it is an object of the present invention to increase the precision for determining the position of the mobile receiver and simplifying the method for determining the position, in particular for the mobile receiver.

This object is achieved by a method for providing a position of a mobile receiver in a GNS system according to claim 1, a central computation unit according to claim 9 and a software product according to claim 10. Preferred embodiments are incorporated in the dependent claims, the description and the figures.

According to the present invention a method for generating and providing a position of a mobile receiver in a GNS system, is provided, comprising:
- receiving primary data of the mobile receiver at a central computation unit, the primary data being at least suitable for determining pseudoranges of the mobile receiver and being forwarded from the mobile receiver to the central computation unit, preferably via a satellite signal, a radio signal or a terrestrial signal,
- receiving secondary data at the central computation unit, the secondary data including at least secondary data for determining correction information and being forwarded from at least one reference station to the central computation unit, preferably via a satellite signal, a radio signal or a terrestrial signal,
- determining at the central computation unit
   -- the correction information for the position of the mobile receiver specified by the primary data and
   -- the position of the mobile receiver and/or basis information concerning the position of the mobile receiver and
- providing the determined position and/or the basis information to the mobile receiver by transmitting the determined position and/or the basis information to the mobile receiver, in particular by a satellite signal, a radio signal and/or a terrestrial signal, especially in real time.

Contrary to the prior art it is provided according to the present invention to determine a position of a mobile receiver and/or a basis information at the central computation unit. As a consequence, the computational effort at the mobile receiver is significantly reduced. As a result, the energy consumption of the mobile receiver can be reduced. Thereby, the information of the primary data for calculating the correction information are used at the central computation unit such that the accuracy of determining can be further increased, as it is possible to perform more complicated algorithms for determining the position of the mobile receiver based on the primary data and the correction information at the central computation unit having a greater computational capacity compared to the mobile receiver. This also supports increasing the accuracy of determining the current position of the mobile receiver. Preferably, the primary data includes the pseudoranges of the individual mobile receiver for getting a rough estimation of the position of the mobile receiver, being used for choosing the proper correction information and calculate the precise position and/or the basis information, based on the correction information and the primary data at the central computation unit. After determining the precise position and/or the basis information, the precise position and/or the basis information are forwarded to the mobile receiver, particularly in real-time. Preferably, the correction information are determined without using the data of the primary data. In other words, the primary data are not used as input parameter for calculating the correction information. Providing the positioning solution includes presenting the result and/or the position to the mobile receiver, in particular its user. Preferably, the position is visualized to the user of the mobile receiver, for example on a display of the mobile receiver.

The present invention concerns a method for generating and providing a precise positioning solution of a mobile receiver in a GNS system by employing a central computation unit, which uses the distributed individual mobile receiver observables and combines them with corrections, in particular PPP-corrections, global and regional atmospheric estimates (e.g. ionospheric corrections and tropospheric delay estimates) as well as bias information. Subsequently, it is possible to augment the resulting high accurate positioning data with authentication and integrity information to be disseminated back to the originator, i. e. the original mobile receiver, which provides the individual mobile observables to the central computation unit, for further processing and usage. As high accurate position data such positions are preferably understood, which have a spatial resolution of less than 20 cm, preferably less than 10 cm and most preferably less than 2,5 cm.

The term "basis information" concerns such information, which are mainly equivalent to the determined position of a specific mobile receiver, but for example need only a simple final transformation (in dependency of the application requirements of the mobile receiver) or calculation, without the need of an algorithm having the secondary data as input data. In other words, it is also conceivable that the mobile receiver gets basis information, which can be used in a simplified manner for determining the position of the mobile receiver at the mobile receiver, without performing complicated algorithms at the mobile receiver. For example, the mobile receiver only needs to perform a simple calculation step and does not perform the determination of the correction information at the side of the mobile receiver, in particular calculations, which need secondary data as input.

Concerning the simple calculation step, it is pointed out that the mobile receiver receives binary data, containing the basis information and/or the determined position. At the receiver
- a decoding of the received raw data, i. e. the determined position and/or the basis information, from central unit, is performed
- a protocol/format conversion (i. e. encoding the information in a format readable by the core application of the mobile receiver unit) is performed and/or
preferably authentication of data information as well as data integrity are checked, so that the user can rely on the corrected information or uses instead the standard positioning information (without applying PPP), which is still calculated by the mobile receiver internal components. For example, the correction data (orbit, clock, atmospheric estimates and bias) are generated centrally as in the standard PPP solution. As a consequence, the mobile receiver does not need to run the PPP algorithm to process the end user PPP positioning solution as it is done centrally as well. The mobile receiver is just configured for receiving observables and preferably calculating a standard dual frequency positioning solution for backup usage, but provides the observables to a cloud for processing and receives back the PPP position in real time. This is offloading the CPU power and results in improved processing margins available for other applications, lower power consumption and extended battery range.

In particular, it is provided that for determining the basis information at least 75%, preferably at least 90 % and most preferably at least 95 % of the computational work for determining the position of the mobile receiver is performed at the central computation unit. Preferably, the central computation unit is configured as cloud system. Such a cloud system is scalable with a number of users and is able to process a large plurality (more than one million) of mobile receivers, which stream observables in parallel. The central computation unit is configured to map an input and output of data to the individual mobile receiver such that the proper information are distributed to the proper individual mobile receiver. Such a mapping can be handled, for example by a corresponding software tool.

Preferably, the primary data comprises a part of the observables and/or pseudorange information, also information about the HW configuration of the mobile receiver (e.g. manufacturer antenna, chipset etc). Using this information, the central computation unit can take into account the individual HW antenna characteristic, receiver bias and further specifications for calculating the most accurate PPP position.

The secondary data from the reference station network are used to generate PPP corrections. It is also conceivable that an artificial intelligence algorithm is applied to identify and cancel radio frequency interferences and spoofing attacks to increase the resilience and robustness of the central processing algorithm. The central computation unit adds authentication and data integrity flag information to the calculated PPP positioning information at its output side.

In particular, the primary data comprises a pseudorange rate, an automatic gain controller value, an accumulated delta range, a carrier phase information of the mobile receiver, being correlated to the position of the mobile receiver, and/or a received navigation message information. The received navigation message information is the information being forwarded to the receiver from the satellite.

Preferably, it is provided that the method can be applied for correction information being evaluated by the RKT technique and/or PPP technique.

According to a preferred embodiment it is provided that reliability of the secondary data of the at least one reference station and/or of the primary data of the mobile receiver are checked, in particular by using a machine learning mechanism. Due to the outsourcing of the computation of complex algorithms to the central computation unit it is also possible to perform a reliability check of the secondary data and/or the primary data, especially by using a well-trained machine learning algorithm, since the central computation unit can rely on a huge number of test data. As a consequence, it is possible to avoid spoofing and a RF protection can be guaranteed for the receiver of the primary and/or secondary data, i. e. the central computation unit. As a result, the system, including the central computation unit and the mobile receiver, is less prawn for attacks from the outside to receive information either from the central computation unit or the mobile receiver.

Especially, it turned out that the previous primary and secondary data collected for other mobile receivers and/or the same mobile receivers can be used as test data for a machine learning mechanism such that a well-trained artificial neuronal network can be established by using the test data of a plurality of mobile receivers.

Furthermore, it is preferred that the central computation unit comprises several computers performing a network, such as a cloud. As a cloud or network, the central computer network can be scaled for handling even more complex algorithms for determining correction information and/or handling the data including the incoming primary data and/or secondary data.

Furthermore, it is preferably provided that the method comprises the following step:
- receiving secondary data from satellites at a plurality of reference stations,
- forwarding the secondary data received at the reference stations to the central computation unit, in particular in a real time data stream,
- determining the correction information, in particular orbit clock or bias/atmospheric delay correction confirmation, at the computer unit based on the secondary data from the different reference stations for PPP.

Preferably, PPP is used for determining the basis information and/or position of the mobile receiver. Outsourcing the determination of the correction information and especially of the position of the mobile receive based on PPP is of advantage since PPP calculation needs a huge amount of computational effort for guaranteeing the accuracy at establishing a reasonable convert against time to get an information about the real time position of mobile receiver being as precise as possible.

As a result, the central computation unit collects all secondary data and determines the correction information, in particular the combined orbit error, clock offset, signal bias and atmospheric delay correction information, and subsequently the authenticated correction information message is used for determining the position(basis information and forwarded it to the mobile receiver via at least one GNS (global navigation satellite), preferably via each GNS that provides the secondary data to the certain mobile receiver. Thus, it is possible to take the secondary data of a large number of reference stations into account for determining the correction information for establishing the desired accuracy at one central computation unit. Further, the present invention allows central dissemination of the correction information, by using preferably several sets of secondary data or different secondary data, referring to different information needed to determine the correction information. As a consequence, no communication between different distribution centres is needed.

Preferably, it is provided that a large number of stationary reference stations are evenly distributed around the globe and the locations of the reference stations are precisely known. It is conceivable that there are regions having an increased density of reference stations and there are regions having a decreased density of reference stations. In particular, it is provided that at least 5 reference stations, preferably more than 10 reference stations and most preferably more than 15 reference stations, concurrently receive the navigation signal of one satellite. The generated secondary data stream originated from the reference stations comprises observations on at least two frequencies and a data rate of at least 1 Hz to be transmitted to the central computation unit. The correction information is computed based on differences between measured and modelled pseudorange and carrier-phase observations at the central processing unit. Raw input data are stored as an internal buffer for access by a Kalman-filter and additionally recorded in observation files. Finally, the computed correction information message is included in the data channel of a carrier signal transmitted from one or multiple spacecraft.

Furthermore, it is preferably considerable that the correction information, at least a part of the correction information, is provided to the mobile receiver via a terrestrial system.

Examples for realizing a PPP approach can be found in EP 10 94 428 A2 and in EP 2 281 210 B1 of which the contents regarding PPP are herewith referred to explicitly.

Part of the correction information is a correction for the satellites' on-board clock offset. Clock corrections are necessary due to unpredictable clock offset or clock drift variations. Preferably, it is provided to provide the clock correction information based on the secondary data of several different reference stations that form a global network. It should be mentioned that the reference stations locations differ and are complementing the stationary receiving stations that are used for the GNS system. Preferably, the clock correction is provided in real-time for realizing a comparably short latency, for example shorter than 10 sec, in order to determinate the current position in the most precise way. Preferably, for determining the clock correction, a sequential filter such as the Kalman-filter is used. The Kalman-filter preferably processes the secondary data from a global reference station network. These reference stations transfer their secondary data in real-time as data stream.

Besides the secondary data, in particular the real-time data stream, the Kalman-filter uses predicted orbits and clocks, differential code biases, Earth Orientation Parameters (EOPs), antenna phase pattern information and information on the operational status of each GNS. The predicted part of an ultra-rapid orbit product is used as a-priori information during data processing. The orbits are updated at least four times each day with a latency of less than three hours relative to the last observations. When new orbit predictions become available, they are updated in the filter to assure that the most precise orbit information is available.

The differential code bias corrections must be used, since not all stations and receivers track the same signals in the same tracking mode. Furthermore, the most recent predicted earth-orientation-parameters (EOP) are retrieved from an EOP service provider. The most recent antenna phase centre offsets (PCO) and variations (PCV) according to standardized conventions are used for the computation of the clocks correction. For precise positioning, the phase centre of an antenna cannot be defined as a fixed point, because elevation- and azimuth-dependent phase reception patterns must be taken into account. Therefore, each GNSS antenna is characterized using a constant phase centre offset vector and a table, which holds the information for the phase reception pattern.

Finally, up-to-date information about the current status of the GNS constellation must also be present for determination of the clock correction. Satellites are frequently set unusable due to orbital maneuvers or maintenance and must be excluded from the estimation during these periods. The automatic exclusion of satellites from the estimation is done for all GNS based on the satellite health status in the navigation data.

Furthermore, it is preferably provided that the at least one satellite orbits earth in a height between 200 km and 30,000 km, preferably between 900 km and 28,000 km and most preferably between 18,000 km and 26,000 km. In other words: the method excludes the use of geostationary satellites that orbits earth in a height of about 36,000 km. In particular, the distance refers to a mean height of the satellite's orbit above the equator. Preferably, the method uses satellites travelling in the Medium Earth Orbit (MEO) and/or Low Earth Orbit (LEO). In other words: the at least one satellite is a non-geostationary satellite or no quasi-zenith satellites, i. e. the at least one satellite is not on a geostationary or quasi-zenith inclined eccentric orbit. Instead, the method uses satellites that use one or more inclined orbital planes having an eccentricity of less than 0.2, more preferably 0.02 and most preferably less than 0.002. Preferably, the satellites orbit the earth having a maximum inclination between 45° and 80°, more preferably 50° and 70° and most preferably between 52° and 63°. The terms "inclination" or "inclined orbit" mean an orbit being inclined relative to the Earth's equatorial plane. The term "orbital plane" means multiple satellites are spaced and following the same orbital path, whereas one or more different orbital planes are crossing each other in the same intersection point by having the same inclination. As a consequence, no inclination, i. e. an inclination having the value 0°, means that the satellites mainly follows the course of the equator, whereas an inclination of 90° refers to satellites that pass the poles during orbiting the earth.

Preferably, it is provided that the at least one satellite orbits earth with an eccentricity of less than 0.2, more preferably less than 0.05 and most preferably less than 0.02 or even less than 0.002 and/or in one or more inclined orbital planes, wherein, in particular, at least three satellites, in particular at least three satellites of the whole system of satellites used for the method, orbit earth with an eccentricity of less than 0.05 or preferably 0.002.

In particular, it is provided that five or more satellites, preferably 18 or more satellites and most preferably 25 or more satellites were used for providing the correction information and/or the navigation information. Using 18 satellites allows providing the correction information globally, such that the system and the method can be used for a global operable method for determining the position of the receiver, precisely by using the correction information. Using even more than 18 satellites allows redundancy regarding transmitting the correction information and/or the navigation information.

Another aspect of the present invention is a central computation unit, in particular a single central computer device or a network, configured for
- receiving primary data of the mobile receiver at a central computation unit, the primary data being at least suitable for determining pseudoranges of the mobile receiver and being forwarded from the mobile receiver to the central computation unit, preferably via a satellite signal, a radio signal or a terrestrial signal,
- receiving secondary data at the central computation unit, the secondary data including at least secondary data for determining correction information and being forwarded from at least one reference station to the central computation unit, preferably via a satellite signal, a radio signal or a terrestrial signal,
- determining at the central computation unit
   -- the correction information for the position of the mobile receiver specified by the primary data and
   -- the position of the mobile receiver and/or basis information concerning the position of the mobile receiver and
- providing the determined position and/or the basis information to the mobile receiver by transmitting the determined position and/or the basis information to the mobile receiver, in particular by a satellite signal, a radio signal and/or a terrestrial signal, especially in real time. The features and benefits described in the context of the method for providing the correction information apply to the central computation unit analogously and vice versa.

Another aspect of the present invention is the use of a global navigation satellite system comprising of several space vehicles for distributing the correction information messages to the mobile user receiver worldwide. The features and benefits described in the context of the method for providing the correction information apply to the plurality of reference stations, the central computation unit, and/or the mobile user receiver analogously and vice versa.

Another aspect of the present invention is a software product and/or a network, wherein the software product comprises program code for implementing the method according the present invention. The features and benefits described in the context of the method for providing the correction information apply to the software and/or the network analogously and vice versa.

A further aspect of the present invention is the use of the determined position and/or basis information in applications with high requirements on safety and security, for which it is necessary to authenticate the correction information in order to allow for the verification at the receiver, that the correction information has been transmitted by a trusted source. An authentication architecture and process enables eligible users to verify that the correction information originates from a credible source and that the content, timing or sequences of correction messages were not modified. The integrity of an augmentation information is guaranteed. In order to optimize the authentication data, the chosen architecture and process mitigate computational costs and end-to-end latency. It shall also incorporate correction mechanisms to counteract transmission errors and message losses.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig.** 1: schematically illustrates a first part of a method for providing a clock correction according to a first preferred embodiment of the present invention,
- **Fig.** 2: schematically illustrates a second part of the method for providing a clock correction according to a first preferred embodiment of the present invention,
- **Fig.** 3: schematically shows a flow diagram illustrating the method according to the figures 1 and 2 and
- **Fig. 4**: schematically shows a flow diagram illustrating a plausibility check of the secondary data according to a second preferred embodiment of the present invention.

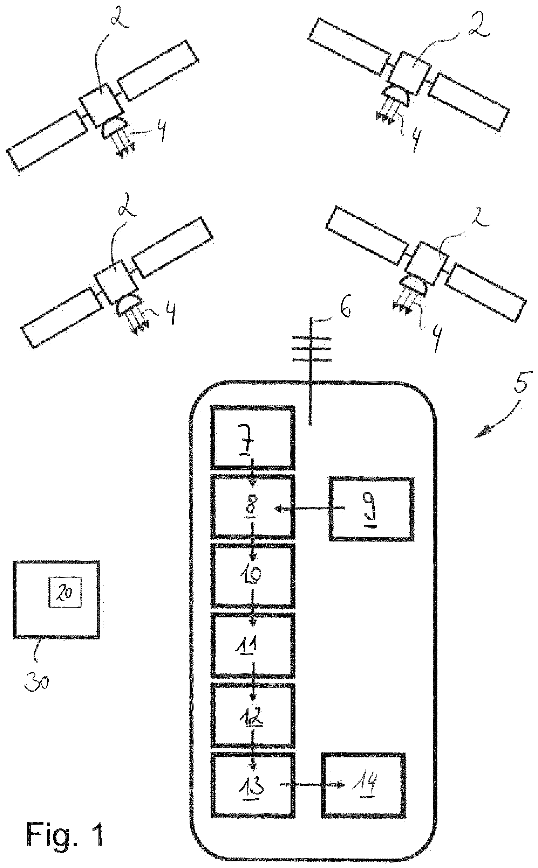

In **figure 1** a method for determining the positon of a mobile receiver 5 by using a global navigation satellite system (GNS system) is illustrated. A global navigation satellite system comprises satellites 2 orbiting around the earth 14 and emitting navigation signals 4 modulated on a number of carrier frequencies. The navigation signals 4 are received by a mobile receiver 5, such as a mobile navigation system that might be incorporated in a mobile unit and/or a vehicle, via an antenna 6. The received navigation signal 4 comprises primary data 31 for determining the position, in particular the actual position, of the mobile receiver 5. The antenna 6 is connected to a band pass filter and low noise amplifier 7, in which the received navigation signal 4 are amplified. In a subsequent down converter 8 that is connected to the band pass filter and low noise amplifier 7 and to a reference oscillator 9, the received navigation signal 4 is converted to lower frequencies using the oscillating signal from the reference oscillator 9. The down-converted navigation signal is passing a band pass and sampling unit 10, in which the analogue navigation signal 4 is sampled. The sampled navigation signal 4 is then passed to a tracking unit 11, where the navigation signals 4, in particular phases of carrier signals and/or the delay of code signals included in the navigation signal 4, are tracked. The tracking unit 11 is followed by a bias subtraction unit 12, in which phase and/or code biases are subtracted from the phases of the carrier signals and from the code signal. A subsequent position estimation unit 13 determines the actual position of the navigation device 5 based on phase signal obtained by processing the carrier signal and based on the codes signals. The results of the position estimation can finally be displayed on a monitoring device 14.

The received GNS signal 4, including the primary data 31, is used by the mobile receiver 5 to generate pseudorange and carrier-phase measurements and decode the navigation data containing the coarse satellite position, time and clock correction parameters and almanac data as well as receiver performance specific automatic control values. According to the state of the art, the mobile receiver 5 decodes the correction information 20 disseminated from a subset of the tracked satellites 2 on a subset of the GNS signals 4. The precise correction information 20 is then used in combination with the coarse navigation data to precisely model the pseudorange and carrier-phase measurements and correct for atmospheric delays. The precisely modelled observations enable the mobile receiver 5, to compute a precise estimate of the position, in particular the actual position, using PPP.

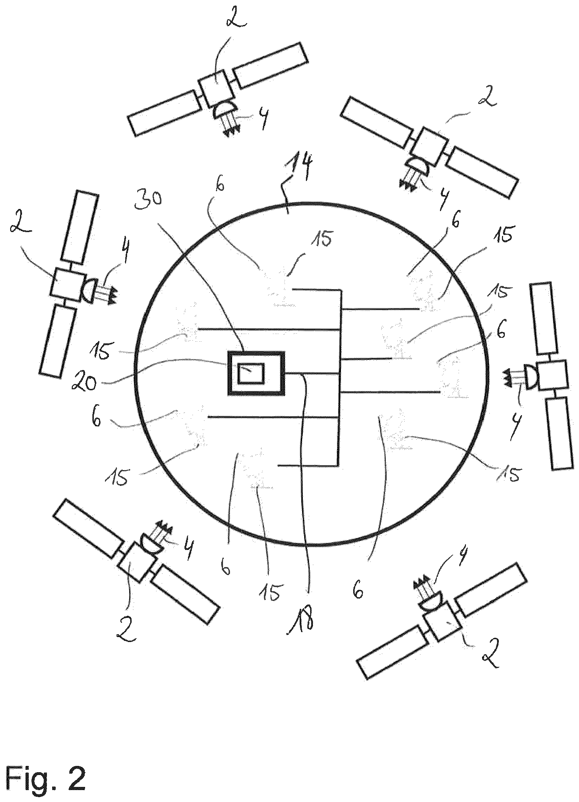

In **figure 2** several reference stations 15 are illustrated. These reference stations 15 are distributed around the globe 14 and receive the navigation signals 4 by their antennas 6. The reference stations 15 generate secondary data 32, which are used to determine correction information 20 by using the fact that the position of the reference station 15 is known and multiple reference stations 15 are receiving the navigation signal from the GNS satellites.

For providing correction information Real Time Kinematic solution (RTK) and Precise Point Positioning (PPP) techniques are known. In contrast to a Real Time Kinematic (RTK) solution, which requires a local base station and a link to the mobile receiver in proximity of a few km for distribution of the correction data, the Precise Point Positioning (PPP) technique works globally, hence without local base station and direct radio link with the mobile receiver.

For determining the correction information 20 it is provided to receive secondary data 32 of a set of several satellites 2 by at least one reference station 15. Furthermore, there are additional reference stations 15 that receive secondary data 32 from another set of satellites 2 or the same set of satellites 2. Furthermore, it is provided that the received secondary data 32 are forwarded to a central computation unit 30, preferably in form of a data stream 18. In particular, the secondary data 32 included in the data stream 18 are each assigned to a certain reference station 15.

Preferably, the secondary data 32 being assigned to the respective reference station 15 are forwarded to the central computation unit 30 together with other secondary data 32 from different reference stations 15 in a data stream 18, in particular in a common data stream 18. The central computation unit 30 comprises a processor that is configured to determinate the correction information 20, in particular for each of the satellites 2 individually.

Moreover, it is provided that the mobile receiver 5 forwards or broadcasts primary data 31, which can be used at least for determining pseudorange, pseudorange rate, receiver chip specific automatic gain controller value, accumulated delta range or carrier phase information of and at the mobile receiver 5 as well as the received navigation message information, to the central computation unit 30. Furthermore, the secondary data 32, which can be used for determining correction information 20, are also received at the same central computation unit 30. The secondary data 32 are broadcasted or forwarded from a reference station 15 to the central computation unit 30.

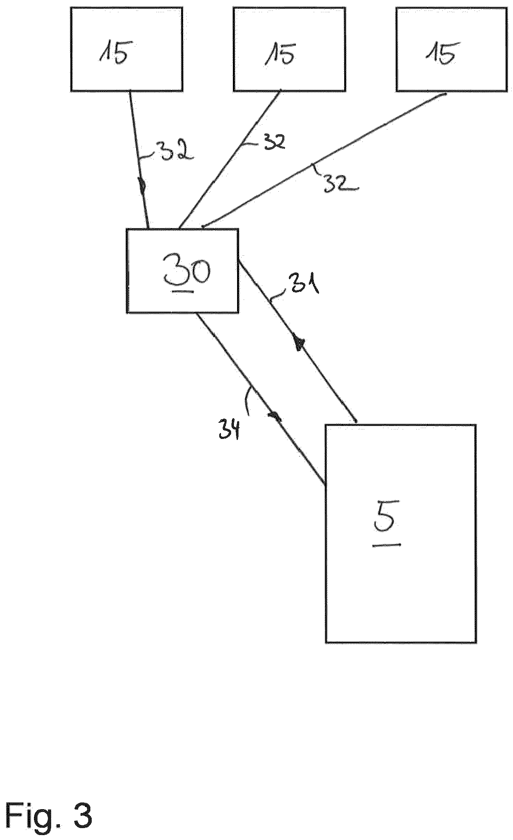

In contrast to the prior art, it is provided to handle the primary data 31 and the secondary data 32 at the central computation unit 30 for determining the position of the mobile receiver 5 or at least basis information 34 concerning the position of the mobile receiver 5. The determined, in particular calculated, basis information 34 and/or position of the receiver 5 is transmitted from the central computation unit 30 to the mobile receiver 5 as it is illustrated in **figure 3****.** Instead of performing the calculations for determining the position of the mobile receiver 5 or the basis information 34 at the mobile receiver 5, these calculations and algorithms are performed at the central computation unit 30. As a consequence it is possible to perform algorithms, which need a huge computation capacity at the central computation unit 30 and not at the mobile receiver 5. By performing the calculations at the central computation unit 30, it is possible to outsource all the computational efforts to the computer unit 30 such that the computational work is no longer performed at the mobile receiver 5. As a result, it is possible to save energy of the mobile receiver 5. As a consequence of saving energy at the mobile receiver 5, the stored electrical energy of the mobile receiver 5 can be used for a longer time span, advantageously.

Preferably, it is provided that the central computation unit 30 identifies a rough estimation of the position of the mobile receiver 5 by the primary data 31 and subsequently preforms calculation to determine the correction information 20 being correlated to the rough estimation of the position of the mobile receiver. A rough estimation, for example, identifies the position of the mobile receiver 5 with a spatial resolution of a few meters. Subsequently, it is possible to use the correction information 20 to precisely determine the position or the basis information 34 of the mobile receiver 5 for the individual primary data 31.

Furthermore, it is possible to use machine learning mechanism and preferably rely on the test data or previous data of the mobile receiver 5 for improving the accuracy and/or reasonability of the forwarded data. It is also thinkable that the central computation unit 30 uses the same or a part of the correction information 20 for another mobile receiver 5, when he identifies several mobile receivers 5 having the same or similar position being roughly determined.

Especially, the central computation unit 30 can be realized by a network of computers such that the computation capacity of the central computation unit 30 can be configured for performing complicated algorithms being needed for accurate determination of the position, in particular in case of the PPP technique.

Especially, it is even possible to use the central computation unit 30 for proving a quality and/or reliability test of the data, the data being provided by the reference station 15 and/or the mobile receiver 5. For example, it is possible to identify a spoofing or to create a RF protection for avoiding attacks to the central computation unit 30.

Furthermore, it is possible to encrypt the provided information being forwarded to the mobile receiver 5, preferably including the determined position of the mobile receiver 5 and/or the basis information 20.

It is also conceivable that instead of receiving the determined position of the mobile receiver 5, the receiver 5 receives basis information 34 from the computer unit 30. Especially, the term basis information 34 means that the information being provided to the mobile receiver 5 are generated at the computer unit 30 and can be used to determine the precise position of the mobile receiver 5 by a comparably small amount of computation effort. Instead of just forwarding and broadcasting the correction information 20 for computing the position at the mobile receiver 5, the basis information 34 only needs a simple implementation for finally determining the position of the mobile receiver 5.

Particularly, it is provided that the primary data 31 is just forwarded after receiving the navigation signals 4 from a satellite 2. Thus, it is possible to provide this data in real time to the computational unit 30 for providing the determination of position also in real time.

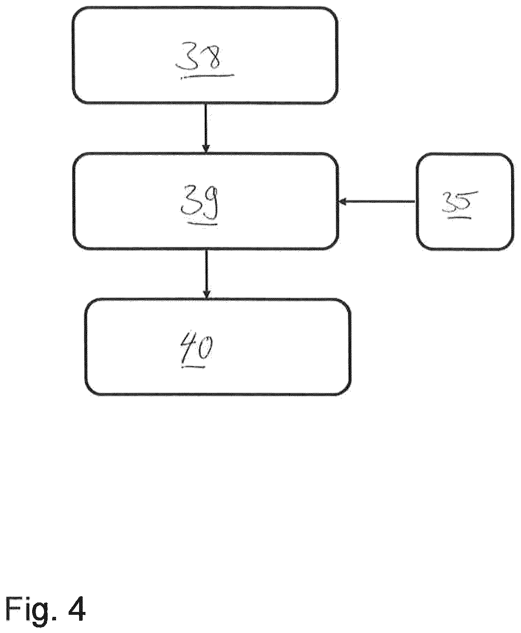

In **figure 4** a flow diagram illustrating a plausibility check of the secondary data 32 according to a preferred embodiment of the present invention is shown. There is a certain probability that the secondary data 32 included in the data stream 18 that is received at the central computation 30 unit are wrongly referenced or assigned.

This would cause an error in determining the correction information 20, and subsequently affects the accuracy of determining the position of the mobile receiver 5. For avoiding that corrupted secondary data 32 are taken into account for determining the correction information 20a, a plausibility check is performed at the central computation unit 30, in particular for each set of secondary data 32 of the data stream 18. For performing the plausibility check it is preferably provided that the secondary data 32 being assigned to the certain reference station 15 are used to determinate 38 the position of said certain reference station 15 based on the secondary data 32. Further, the determined position of the reference station 15 is preferably compared 39 to a reference value 35 such as a saved geographic information of said reference station 15, in particular its geographical position. In the case the difference between the determined position of the reference station 15 based on the secondary data 23 and the geographic position is larger than a threshold, the secondary data 32 of this reference station 15 are excluded 40 from determining the correction information 20. Preferably, this secondary data 32 are extracted / removed from the data stream 18 and/or a warning signal is generated.

### Reference numbers:

- 2: satellite
- 4: navigation signal
- 5: mobile receiver
- 6: antenna
- 7: band pass filter and low noise amplifier
- 8: down converter
- 9: reference oscillator
- 10: band pass and sampling unit
- 11: tracking unit
- 12: subtraction unit
- 13: estimation unit
- 14: globe
- 15: reference station
- 18: data stream
- 20: correction information
- 30: central computation unit
- 31: primary data
- 32: secondary data
- 34: basis information
- 35: reference value
- 38: determining the position of a certain reference station
- 39: comparing/compared
- 40: excluding/excluded

## Claims

1. A method for generating and providing a position of a mobile receiver (5) in a GNS system, comprising:
- receiving primary data (31) of the mobile receiver (5) at a central computation unit (30), the primary data (31) being at least suitable for determining a pseudorange (5) and being forwarded from the mobile receiver (5) to the central computation unit (30), preferably via a satellite signal, a radio signal or a terrestrial signal
- receiving secondary data (32) at the central computation unit (30), the secondary data (32) including at least secondary data (32) for determining correction information and being forwarded from at least one reference station (15) to the central computation unit, preferably via a satellite signal, a radio signal or a terrestrial signal,
- determining at the central computation unit (30)
-- the correction information (20) for the position of the mobile receiver (5) and
-- the position of the mobile receiver (5) and/or basis information concerning the position of the mobile receiver (5) and
- providing the determined position and/or the basis information (34) to the mobile receiver (5) by transmitting the determined position and/or the basis information to the mobile receiver (5), in particular by a satellite signal, a radio signal and/or a terrestrial signal, especially in real time.

2. The method according to claim 1, further comprising:
- checking reliability of the secondary data (32) of the at least one reference station (15) and/or of the primary data (31) of the mobile receiver (5) at the central computation unit (30), in particular by using a machine learning mechanism.

3. The method according to one of the preceding claims, wherein the primary data (31) comprises a pseudorange rate, an automatic gain controller value, an accumulated delta range, a carrier phase information of the mobile receiver, being correlated to the position of the mobile receiver, and/or a received navigation message information.

4. The method according to one of the proceeding claims, wherein the central computation unit (30) includes several subunits forming a network, for example a cloud.

5. The method according to one of the preceding claims, wherein variants of precise point positioning (PPP) techniques as applicable for the specific use case and mobile receiver device are used for determining the basis information (34) and/or the position of the mobile receiver (5).

6. The method according to one of the preceding claims, wherein for determining the basis information (34) at least 75%, preferably at least 90 % and most preferably at least 95 % of the computational work for determining the position of the mobile receiver (5) is performed at the central computation unit (30).

7. The method according to claim 1, further comprising:
- receiving secondary data from satellites (2) at a plurality of reference stations (15);
- forwarding the secondary data (32) received at the reference stations (15) to the central computation unit (30), in particular in a real-time data stream;
- determining the correction information (20), in particular orbit, clock, atmospheric estimates and/or bias/offset correction information, at the computation unit (30) based on the secondary data (32) received from the different reference stations (15).

8. The method according to one of the preceding claims, wherein the at least one satellite (2) orbits earth in a distance between 200 km and 30,000 km, preferably between 900 km and 28,000 km and most preferably between 18,000 km and 26,000 km.

9. The method according to one of the preceding claims, wherein the signals including the determined position and/or the basis information (34) are encrypted.

10. A central computation unit (30), in particular a single central computer device (30) or a network, configured for
- receiving primary data (31) of the mobile receiver (5) at the central computation unit (30), the primary data (31) being at least suitable for determining pseudoranges of the mobile receiver (5) and being forwarded from the mobile receiver (5) to the central computation unit (30), preferably via a satellite signal, a radio signal or a terrestrial signal, the primary data (31) in particular including a pseudorange rate, an automatic gain controller value, an accumulated delta range, a carrier phase information of the mobile receiver, being correlated to the position of the mobile receiver and/or a received navigation message information
- receiving secondary data (32) at the central computation unit (30), the secondary data (32) including at least secondary data (32) for determining correction information and being forwarded from at least one reference station (15) to the central computation unit, preferably via a satellite signal, a radio signal or a terrestrial signal,
- determining at the central computation unit (30)
-- the correction information for the position of the mobile receiver (5) and
-- the position of the mobile receiver (5) and/or basis information concerning the position of the mobile receiver (5) and
- providing the determined position and/or the basis information to the mobile receiver (5) by transmitting the determined position and/or the basis information to the mobile receiver, in particular by a satellite signal, a radio signal and/or a terrestrial signal, especially in real time.

11. A software product, wherein the software product comprises program code for implementing one of the methods according to one of the claims 1 to 9.

## Amended claims

### Amended claims in accordance with Rule 137(2) EPC.

**1.** A method for generating and providing a position of a mobile receiver (5) in a GNS (Global Navigation Satellite) system, comprising:
- receiving primary data (31) of the mobile receiver (5) at a central computation unit (30), the primary data (31) being at least suitable for determining a pseudorange (5) and being forwarded from the mobile receiver (5) to the central computation unit (30),
- receiving secondary data (32) at the central computation unit (30), the secondary data (32) including at least secondary data (32) for determining correction information and being forwarded from at least one reference station (15) to the central computation unit,
- determining at the central computation unit (30)
-- the correction information (20) for the position of the mobile receiver (5) and
-- the position of the mobile receiver (5) and/or basis information concerning the position of the mobile receiver (5) and
- providing the determined position and/or the basis information (34) to the mobile receiver (5) by transmitting the determined position and/or the basis information to the mobile receiver (5), **characterized in that** variants of precise point positioning (PPP) techniques as applicable for the specific use case and mobile receiver device are used for determining the basis information (34) and/or the position of the mobile receiver (5).

**2.** The method according to claim 1, further comprising:
- checking reliability of the secondary data (32) of the at least one reference station (15) and/or of the primary data (31) of the mobile receiver (5) at the central computation unit (30), in particular by using a machine learning mechanism.

**3.** The method according to one of the preceding claims, wherein the primary data (31) comprises a pseudorange rate, an automatic gain controller value, an accumulated delta range, a carrier phase information of the mobile receiver, being correlated to the position of the mobile receiver, or a received navigation message information.

**4.** The method according to one of the proceeding claims, wherein the central computation unit (30) includes several subunits forming a network, for example a cloud.

**5.** The method according to one of the preceding claims, wherein for determining the basis information (34) at least 90 % of the computational work for determining the position of the mobile receiver (5) is performed at the central computation unit (30).

**6.** The method according to claim 1, further comprising:
- receiving secondary data from satellites (2) at a plurality of reference stations (15);
- forwarding the secondary data (32) received at the reference stations (15) to the central computation unit (30),
- determining the correction information (20), at the computation unit (30) based on the secondary data (32) received from the different reference stations (15).

**7.** The method according to one of the preceding claims, wherein at least one satellite (2) orbits earth in a distance between 200 km and 30,000 km.

**9.** The method according to one of the preceding claims, wherein the signals including the determined position and/or the basis information (34) are encrypted.

**10.** A central computation unit (30), in particular a single central computer device (30) or a network, configured for
- receiving primary data (31) of the mobile receiver (5) at the central computation unit (30), the primary data (31) being at least suitable for determining pseudoranges of the mobile receiver (5) and being forwarded from the mobile receiver (5) to the central computation unit (30), preferably via a satellite signal, a radio signal or a terrestrial signal, the primary data (31) in particular including a pseudorange rate, an automatic gain controller value, an accumulated delta range, a carrier phase information of the mobile receiver, being correlated to the position of the mobile receiver and/or a received navigation message information
- receiving secondary data (32) at the central computation unit (30), the secondary data (32) including at least secondary data (32) for determining correction information and being forwarded from at least one reference station (15) to the central computation unit, ,
- determining at the central computation unit (30)
-- the correction information for the position of the mobile receiver (5) and
-- the position of the mobile receiver (5) and/or basis information concerning the position of the mobile receiver (5) and
- providing the determined position and/or the basis information to the mobile receiver (5) by transmitting the determined position and/or the basis information to the mobile receiver.

**11.** A software product, wherein the software product comprises program code for implementing one of the methods according to one of the claims 1 to 9.
